# EUROPÄISCHE PATENTSCHRIFT

(11) **EP 3 279 480 B1**
(45) Veröffentlichungstag und Bekanntmachung des Hinweises auf die Patenterteilung: **27.03.2019**
(21) Anmeldenummer: 17181846.1
(22) Anmeldetag: 18.07.2017
(51) Int. Cl.: F04D 29/60, F16B 5/02, F04D 29/40, F04D 29/42, F04D 29/52

(54) **VORRICHTUNG ZUR BEFESTIGUNG EINES LÜFTERS**
DEVICE FOR FIXING A VENTILATOR
DISPOSITIF DE FIXATION D'UN VENTILATEUR

(30) Priorität: 02.08.2016 DE 202016004703 U
(43) Veröffentlichungstag der Anmeldung: 07.02.2018
(73) Patentinhaber: SIEGENIA-AUBI KG, 57234 Wilnsdorf (DE)
(72) Erfinder: BECKER, Christoph, 57234 Wilnsdorf (DE); SASSMANNSHAUSEN, Jürgen, 57271 Hilchenbach (DE); ZÖLLER, Martin, 57074 Siegen (DE)

(56) Entgegenhaltungen:
- WO-A1-2012/095086
- DE-A1- 10 227 237
- DE-U1- 20 200 199
- US-A- 5 623 893
- US-A1- 2012 195 749

## Beschreibung

Die Erfindung betrifft eine Befestigungsvorrichtung für die Befestigung eines Lüfters an eine Wand, einer Gebäudewand oder einer Decke nach dem Oberbegriff des Anspruchs 1.

Bei der Befestigung derartiger Lüfter, die nahe ihrer Befestigungsfläche einer Wand oder einer Decke mit vorgefertigten Montageöffnungen versehen sind, besteht ganz allgemein das Problem, dass beim Befestigen jeweiliger Befestigungselemente, d.h. in der Regel Befestigungsschrauben, infolge mangelnder Ausrichtung der einzelnen Teile zueinander, der zu montierende Lüfter seine Position an einer Wand nicht gemäß seiner Vorgaben einhalten kann. Hierdurch kann es zu einer ungleichmäßig lotrechten Lage des Lüfters kommen. Oftmals ist selbst ein Nachjustieren des Lüfters nicht mehr möglich, da es die Montageöffnungen des Lüfters nicht vorsehen oder die Aufnahmevorrichtung, beispielsweise Bohrungen an der Wand oder Decke, mit falscher Position ein Befestigen des Lüfters nicht erlauben.

Aus der DE 20 2004 010 526 U1 ist eine Vorrichtung zur Befestigung eines Lüfters an der Wand bekannt, mit einer Anordnung einer Wand, in der sich eine im wesentlichen kreisrunde Ausnehmung befindet, in der ein kreisrunder Lüfter befestigt ist. Am Rand der Ausnehmung ist eine Mehrzahl von Haltegliedern ausgebildet. Die Halteglieder sind jeweils durch zwei parallele Stanzschnitte gebildet und verlaufen, bezogen auf die Ausnehmung, radial nach außen. Dabei sind die Laschen zu federnden Haltekrallen gebogen, die bei der Montage/Demontage etwas in radialer Richtung nach außen ausfedern können. Der Lüfter lässt sich nur bei genauer Bearbeitung in die Wand montieren. Maßabweichungen lässt die bekannte Vorrichtung nicht zu, so dass es eine Nacharbeitung oder eine Erneuerung der Befestigungsbauteile erfordert.

Weiterhin sind mehrere zumindest bekanntermaßen vier Montageöffnungen für Befestigungsschrauben an Lüftern geläufig, die mit dem Gehäuse einteilig ausgebildet an der Rückwand des Gehäuses und damit angrenzend der Wand zugeordnet sind. Diese lassen jedoch keinerlei Ungenauigkeiten durch verlaufende Bohrungen oder ein falsches Anreißen zum Anbringen von Maßlinien oder Bohrpunkten bei der Montagearbeit einer Befestigung an eine Wand zu.

Weiter wird verwiesen auf die WO 2012/095086 A1. Offenbart ist dabei eine Befestigungsvorrichtung, bestehend einerseits aus einer runden Scheibe, in der ein Langloch ausgebildet ist. Ferner aus einer Stockschraube und aus einer Schraubenmutter und andererseits aus einer Montageöffnung in einem zu befestigenden Gegenstand. Weiter aus einer die Scheibe aufnehmenden Aufnahme, die zentrisch vor der Montageöffnung angeordnet ist, wobei die Montageöffnung und das Langloch in der Scheibe mit der wandseitig befestigbaren Stockschraube in Eingriff bringbar sind. Die Scheibe mit dem Langloch ist unter Eingriff der Stockschraube drehbar in der Aufnahme anordenbar. Die Schraubenmutter ist unter Klemmung der Scheibe auf die Stockschraube aufdrehbar.

Davon ausgehend liegt der Erfindung die Aufgabe zugrunde, eine wandseitige Befestigung für einen mit mindestens zwei vorgefertigten Montageöffnungen versehenen Lüfter zu schaffen, die eine sichere und dauerhafte Montage des Lüfters ermöglicht, ohne dass es zu aufwendigen Nacharbeiten durch unsachgemäßer Positionierung oder einer nicht montagefähigen Anordnung der Montageöffnungen kommt, wobei die Befestigungselemente aus nur wenigen und einfach geformten Bauteilen bestehen sollen, kostengünstig sind und auf einfache, schnelle, sichere und präzise Weise mit wenig Bauraum montiert und justiert werden können.

Zur Lösung dieser Aufgabe wird eine Befestigungsvorrichtung gemäß dem Anspruch 1 für die Befestigung eines mit mindestens zwei Montageelementen versehenen Gehäuses eines Lüfters an einer Wand oder einer Decke vorgeschlagen, die wirkverbunden mit in der Wand oder der Decke angeordneten Aufnahmevorrichtungen oder Bohrungen zur Aufnahme von Befestigungsschrauben zum Festlegen des Lüfters angeordnet ist. Dabei ist die Befestigungsvorrichtung einteilig oder form-/oder kraftschlüssig zweigeteilt mit dem Lüfter verbunden und weist eine Justiereinrichtung für die Befestigungsschraube auf.

Eine solcher Art ausgebildete Befestigungsvorrichtung hat den Vorteil, eine einfache und sichere Befestigung des Lüfters an der Wand zu ermöglichen, ohne dass bei der Montage zu große Flächenpressungen auftreten können, die zu Beschädigungen oder gar Zerstörungen am Gehäusekörper des Lüfters führen, wobei sich der Lüfter durch die einfach gelöste Justiereinrichtung selbst bei ungenauen Bohrungen in der Wand oder der Decke in die gewünschte Lage ausrichten lässt.

Zur Verwirklichung der voranstehenden Vorteile, ist die Justiereinrichtung aus einer drehbaren Platte und einer auf der Platte angeordneten dem Gewindedurchmesser oder Schraubdübel der Befestigungsschraube angepassten Öffnung gebildet. Damit lässt sich die Befestigungsschraube in allen Richtungen in Abhängigkeit der Art und Größe der Öffnung mit möglicher Drehung der Platte um die eigene Drehachse drehen und mit zusätzlichem Verschieben in der Öffnung flächendeckend punktgenau einstellen.

Um die Befestigungsschraube durch die Öffnung der Platte in der Befestigungsvorrichtung des Lüfters verdeckt liegend in der Bohrung der Wand oder der Decke anziehen zu können, wird die Befestigungsvorrichtung an einer Rückwand eines Gehäuses des Lüfters angeordnet und grenzt damit direkt gegen eine Anlagefläche der Wand oder der Decke zur Erzielung eines guten Anpressdrucks an. Mit direkter Anlage der Befestigungsvorrichtung an der Wand, lässt sich sowohl das Einstellen als auch das Anziehen mittels eines Werkzeugs in einem Werkzeugeingriff der Befestigungsschraube exakt bewerkstelligen. Hierdurch ergibt sich eine definierte und größere Auflagefläche durch das vollflächige Aufliegen der Platte an der Wand, welche ebenfalls hohe Flächenpressungen vermeidet und damit eine Schonung der Rückwand des Gehäuses darstellt.

Vorzugsweise ist die Befestigungsschraube zum festen Anschrauben in die Bohrung der Wand oder der Decke ein Schraubdübel, welcher sich als montagevereinfachtes Befestigungssystem darstellt. Der Schraubdübel wird in die vorgebohrte zylindrische Bohrung der Wand oder der Decke eingeschraubt. Das Spezialgewinde des Schraubdübels schneidet beim Einschrauben ein Innengewinde in den Verankerungsgrund. Die Verankerung erfolgt durch den Formschluss des Gewindes. Aufgrund des metrischen Gewindes der Befestigungsschraube, kann die Befestigungsschraube auch nach Anziehen an die Wand zur Nachjustierung des Lüfters gelöst und anschließend wieder befestigt werden, ohne dass die Befestigungsvorrichtung Schaden davon nimmt und es zu einer Beeinträchtigung der Befestigung des Lüfters kommt.

Eine einfache Montage und ein sicherer Halt der Befestigungsschraube auf der Platte wird mit einfachen und kostengünstigen Mitteln dadurch erwirkt, dass die Öffnung als Längsschlitz geformt ist und die Befestigungsschraube mit seinem Schraubenkopf auf der Platte und mit dem Gewindedurchmesser in dem Längsschlitz verschiebbar geführt ist.

Aufgrund einfacher äußerer kreisrunder Formgebung der Platte, die in einer an der Rückwand angeordneten Aufnahme drehbar gelagert ist, kann die Befestigungsvorrichtung funktionell einfach aufgebaut werden, was sich nachhaltig positiv auf die Kosten in der Herstellung auswirkt. Außerdem kann die Aufnahme mit Bewegungsfreiheit der Platte zur Sicherung und Abstützung der Platte formstabil geschlossen um die Platte herum angeordnet werden.

Eine einfache Montage und ein sicherer Halt der Platte in die Aufnahme wird mit einfachen und kostengünstigen Mitteln dadurch erwirkt, dass die Aufnahme ein halbkreisförmiger Steg ist, der die Platte mit einem Teilumfang umschließt. Der Steg ist in der Höhe der Platte angepasst und bildet nach dem Einschieben der Platte zur Lagenfixierung einen Endanschlag für die Platte. Mit Umschließen des Stegs im hälftigen Umfang der Platte formt sich eine drehbare Lagerung mit Bildung einer Drehachse für die Platte. Weiterhin weist der Steg in Richtung zur Drehachse der Platte überdeckend Haltestege auf, welche die Platte lotrecht zur Drehachse sichern. Die Haltestege überragen die Platte in einem Abstand mit drehbarem Spiel auf der sichtbaren Oberfläche mit einem Maß, welches ausreichend ist, die Platte drehbeweglich mit wenig Reibwiderstand zu halten.

Eine gesicherte Lageposition mit der Möglichkeit der Drehung um die eigene Drehachse der Platte wird in vorteilhafter Weise dadurch erreicht, dass sich mit halbkreisförmiger Aufnahme auf der Rückwand eine Öffnung zum Fügen der Platte bildet, wobei im Bereich der Öffnung auf der Rückwand ein Vorsprung angeordnet ist, der auf der zur Aufnahme innen gerichteten Seite eine Keilstufe bildet. Das Einlegen der Platte in die Aufnahme erfolgt durch die Öffnung, wobei die Höhe des Vorsprungs in Abstimmung mit dem Abstand der Haltestege zur Rückwand maßgebend für eine Rast- Schnappverbindung der Platte ist. Dazu ist zur vereinfachten Montage der Platte in die Aufnahme eine Einlaufschräge am Vorsprung vorgesehen, wobei der Vorsprung ausgehend von der Oberfläche Rückwand in Richtung Aufnahme keilförmig einsteigt. Um einen stabilen Halt im montierten Zustand der Platte auch im Bereich der Öffnung zu erreichen, weist der Vorsprung eine Keilstufe auf, hinter der die Platte mit Endanschlag an der Aufnahme schnappt und wirkverbunden gehalten wird. Je nach Auslegung der Breite des Vorsprungs, ist die Keilstufe ausgehend von der Drehachse kreisrund der Umfangsform der Platte angepasst ausgebildet.

Außerdem hat es sich in vorteilhafter Weise bewährt, dass das Gehäuse, die Aufnahme und der Vorsprung einteilig ausgebildet aus einem formstabilem und verrottungsfestem Kunststoffmaterial gefertigt sind, wobei die Platte vorzugsweise aus metallischem Material hergestellt ist. Selbstverständlich sind auch andere Materialien möglich. Jedoch wirkt sich das Kunststoffmaterial bei Montage der Platte positiv auf die Rast-/ Schnappverbindung aus. Die aus Metall bestehende Platte bewirkt eine hohe Festigkeit der Befestigungsvorrichtung im montierten Zustand an der Wand.

Weitere Einzelheiten und Vorteile der Ausgestaltung ergeben sich aus der nachfolgenden Beschreibung der zugehörigen Zeichnungen, in denen eine Ausführungsform einer Befestigungsvorrichtung für einen mit mindestens zwei Montageelementen an einer Wand oder einer Decke versehenen Lüfter dargestellt ist.

Es zeigt:
- Fig. 1: ein von der Rauminnenseite bei geöffnetem Lüfter sichtbarer Abschnitt einer Rückwand in perspektivischer Darstellung der Befestigungsvorrichtung,
- Fig. 2: eine weitere nach Fig. 1 gedrehte perspektivische Darstellung der Befestigungsvorrichtung,
- Fig. 3: eine Vorderansicht des Lüfters bei geöffnetem Gehäuse mit Fortlassen einer - nicht gezeigten - Gehäuseabdeckung mit der Befestigungsvorrichtung in Vorderansicht,
- Fig. 4: eine Seitenansicht der Wand und des Lüfters entsprechend dem Schnitt A-A, mit ebenfalls im Schnitt dargestellter Befestigungsvorrichtung nach Fig. 3 und
- Fig. 5: eine vergrößerte Detaildarstellung der Befestigungsvorrichtung in Wirkverbindung des Lüfters und der Wand nach Fig. 4.

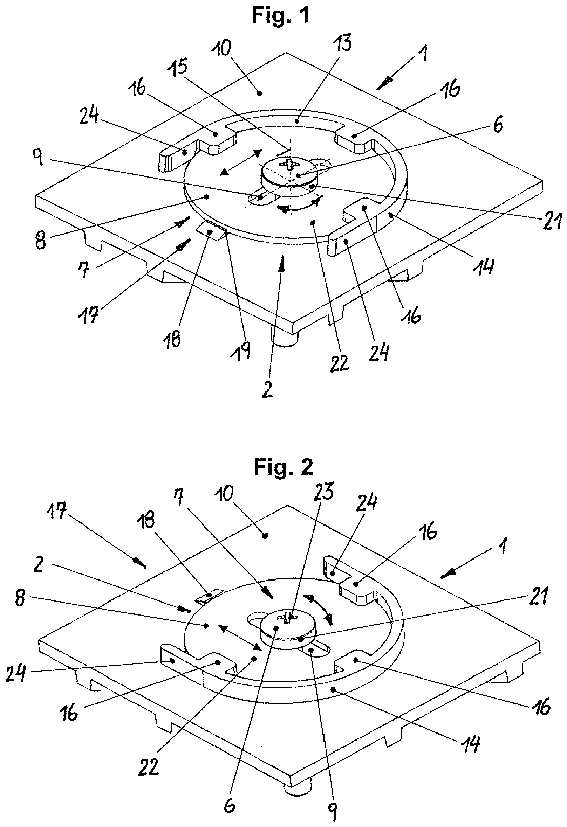

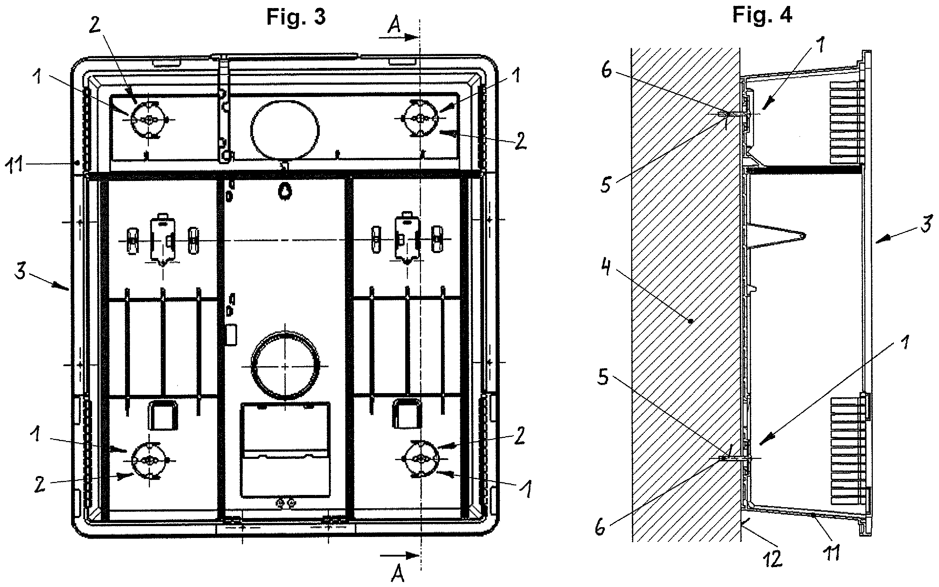

Die geschnittene Seitenansicht mit Darstellung in Fig. 4 lässt erkennen, wie ein als wandhängender Lüfter 3 mittels Befestigungsvorrichtungen 1 an einer Wand 4 befestigt wird. Die hierzu verwendete Befestigungsvorrichtung 1 ist in ihrer montierten Arbeitsstellung in Figuren 1 bis 5 gezeigt.

Dabei weist der Lüfter 3 für die Befestigung mindestens zwei Befestigungsvorrichtungen auf, die an der Wand 4 oder einer Decke wirkverbunden mit in der Wand 4 oder der Decke angeordneten Aufnahmevorrichtungen 5 oder Bohrungen zur Aufnahme von Befestigungsschrauben 6 zum Festlegen des Lüfters 3 angeordnet sind. Beispielsweise nach Fig. 1 und Fig. 2 ist die Befestigungsvorrichtung 1 vorzugsweise einteilig oder form-/oder kraftschlüssig zweigeteilt mit dem Lüfter 3 verbunden und weist eine Justiereinrichtung 7 für die Befestigungsschraube 6 auf.

Nach Fig. 3 finden vier Befestigungsvorrichtungen 1 ihren Einsatz, die an den jeweiligen Ecken des Lüfters 3 positioniert sind. Mit der Befestigungsvorrichtung 1 lässt sich der Lüfter 3 an der Wand 4 befestigen, ohne dass es bei der Montage zu großen Flächenpressungen kommt, die zu Beschädigungen oder gar Zerstörungen am Gehäusekörper 11 des Lüfters 3 führen, wobei sich der Lüfter 3 durch die einfach gelöste Justiereinrichtung 7 selbst bei ungenauen Bohrungen 5 in der Wand 4 oder der Decke in die gewünschte Lage ausrichten lässt.

Dazu ist die Justiereinrichtung 7 nach Fig. 1 und Fig. 2 aus einer drehbaren Platte 8 und einer auf der Platte 8 angeordneten, dem Gewindedurchmesser 20 oder Schraubdübel der Befestigungsschraube 6 angepassten, Öffnung 9 gebildet. Ebenfalls in Fig. 1 und Fig. 2 - anhand von Pfeilen dargestellt -, lässt sich die Befestigungsschraube 6 in allen Richtungen in Abhängigkeit der Art und Größe der Öffnung 9 mit möglicher 360°-Drehung der Platte 8 um die Drehachse 15 drehen und mit zusätzlichem Verschieben in der Öffnung 9 flächendeckend punktgenau einstellen.

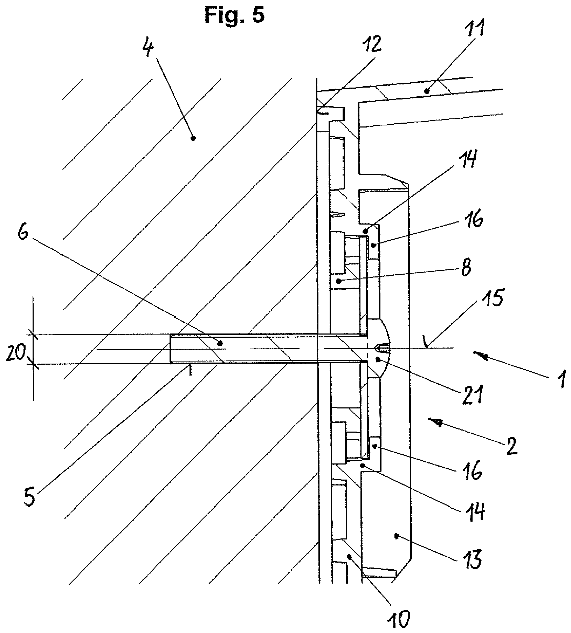

Nach Figuren 3 bis 5 wird die Befestigungsschraube 6 durch die Öffnung 9 der Platte 8 in der Befestigungsvorrichtung 1 des Lüfters 3 verdeckt liegend in der Bohrung 5 der Wand 4 oder der Decke angezogen. Darüber hinaus ist die Befestigungsvorrichtung 1 nach Fig. 4 und Fig. 5 an einer Rückwand 10 des Gehäuses 11 des Lüfters 3 angeordnet und grenzt damit direkt gegen eine Anlagefläche 12 der Wand 4 oder der Decke zur Erzielung eines guten Anpressdrucks an. Mit direkter Anlage der Befestigungsvorrichtung 1 an der Wand 4, lässt sich sowohl das Einstellen als auch das Anziehen mittels eines nicht dargestellten Werkzeugs in einem Werkzeugeingriff 23 der Befestigungsschraube 6 exakt bewerkstelligen. Die Platte 8 liegt an der Wand 4 auf, womit sich eine definierte und größere Auflagefläche an der Wand 4 ergibt, welche ebenfalls hohe Flächenpressungen vermeidet und damit eine Schonung der Rückwand 10 des Gehäuses 11 darstellt.

Für einen sicheren und festen Halt der Befestigungsschraube 6 nach dem Anschrauben in die Bohrung 5 der Wand 4 oder der Decke nach Fig. 4 und Fig. 5, wird ein Schraubdübel eingesetzt, welcher sich als montagevereinfachtes Befestigungssystem darstellt. Der Schraubdübel wird in die vorgebohrte zylindrische Bohrung 5 der Wand 4 oder der Decke eingeschraubt. Das Spezialgewinde des Schraubdübels schneidet beim Einschrauben ein Innengewinde in den Verankerungsgrund. Die Verankerung erfolgt durch den Formschluss des Gewindes. Aufgrund des metrischen Gewindes der Befestigungsschraube 6, kann die Befestigungsschraube 6 auch nach Anziehen an die Wand 4 zur Nachjustierung des Lüfters 3 gelöst und anschließend wieder befestigt werden, ohne das die Befestigungsvorrichtung 1 Schaden davon nimmt und es zu einer Beeinträchtigung der Befestigung des Lüfters 3 kommt.

Wie aus Fig. 1 und Fig. 2 ersichtlich, ist die Befestigungsschraube 6 mit der Platte 8 in einer Öffnung 9 formschlüssig führend wirkverbunden, welche als Längsschlitz geformt ist. Die Befestigungsschraube 6 kann nach Aufstecken der Platte 8 in die Aufnahme 13 durch den Längsschlitz 9 auf die Platte 8 aufgesteckt werden, ohne dass an dem Lüfter 3 oder Befestigungsvorrichtung 1 weitere Bearbeitungen getroffen werden müssen. Ein Anschlag für die Befestigungsschraube 6 in dem Längsschlitz und damit auf der Platte 8 bildet der Schraubenkopf 21, so dass mit endgültiger Lage des Lüfters 3 der Schraubenkopf 21 auf der Platte 8 vollflächig aufliegt und der Gewindedurchmesser 20 oder der Schraubdübel in dem Längsschlitz 9 fixiert gehalten ist.

Gemäß den Figuren 1 und 2 ist die äußere Formgebung der Platte 8 kreisrund ausgebildet und in einer an der Rückwand 10 angeordneten Aufnahme 13 drehbar gelagert. Die dargestellte Aufnahme 13 ist mit Bewegungsfreiheit der Platte 8 zur Sicherung und Abstützung der Platte 8 formstabil geschlossen und um die Platte 8 herum angeordnet.

Wie aus den Figuren 1 und 2 ersichtlich, ist, die Aufnahme 13 als ein halbkreisförmiger Steg 14 ausgebildet, der die Platte 8 mit einem Teilumfang umschließt. Zum vereinfachten Fügen der Platte 8 in die Aufnahme 13, sind am freien Ende des Stegs 14 verlängerte Einlaufkanten 24 angebracht. Der Steg 14 ist der Höhe der Platte 8 angepasst und bildet zur Lagenfixierung einen Endanschlag für die Platte 8 bei der Montage. Mit Umschließen des Stegs 14 im hälftigen Umfang der Platte 8 formt sich eine drehbare Lagerung mit Bildung einer Drehachse 15 für die Platte 8. Weiterhin weist der Steg 14 in Richtung zur Drehachse 15 der Platte 12 überdeckend Haltestege 16 auf, welche die Platte 8 lotrecht zur Drehachse 15 sichern. Die Haltestege 16 überragen die Platte 8 in einem Abstand mit drehbarem Spiel auf der sichtbaren Oberfläche 22 mit einem Maß, welches ausreichend ist, die Platte 8 drehbeweglich mit wenig Reibwiderstand zu halten.

Um die Platte 8 sicher in die Aufnahme 13 der Rückwand 10 platzieren und in allen Richtungen gegen ein mögliches Verschieben zu fixieren, aber eine gesicherte Drehung um die eigene Drehachse 15 zu erreichen, ist nach Fig. 1 und Fig. 2 mit halbkreisförmiger Aufnahme 13 auf der Rückwand 10 eine Öffnung 17 zum Fügen der Platte 8 vorgesehen, welche im Bereich der Öffnung 17 auf der Rückwand 10 ein Vorsprung 18 aufweist, der auf der zur Aufnahme 13 innen gerichteten Seite eine Keilstufe 19 bildet. Das nicht dargestellte Einlegen der Platte 8 in die Aufnahme 13 erfolgt durch die Öffnung 17, wobei die Höhe des Vorsprungs 18 in Abstimmung mit dem Abstand der Haltestege 16 zur Rückwand 10 maßgebend für eine Rast-Schnappverbindung der Platte 8 ist. Eine Einlaufschräge am Vorsprung 18 sorgt für eine reibungslose und vereinfachte Montage der Platte 8 in die Aufnahme 13, wobei der Vorsprung 18 ausgehend von der Oberfläche der Rückwand 10 in Richtung Aufnahme 13 keilförmig einsteigt. Fixiert wird die Platte 8 im montierten Zustand auch im Bereich der Öffnung 17 durch eine an dem Vorsprung 18 angeordnete Keilstufe 19, hinter der die Platte 8 mit Anschlagen an der Aufnahme 13 einschnappt und wirkverbunden gehalten wird. Je nach Auslegung der Breite des Vorsprungs 18, ist die Keilstufe 19 ausgehend von der Drehachse 15 kreisrund der Umfangsform der Platte 8 angepasst ausgebildet.

### Bezugszeichenliste

- 1: Befestigungsvorrichtung
- 2: Montageelement
- 3: Lüfter
- 4: Wand
- 5: Aufnahmevorrichtung/ Bohrung
- 6: Befestigungsschraube
- 7: Justiereinrichtung
- 8: Platte
- 9: Öffnung
- 10: Rückwand
- 11: Gehäuse
- 12: Anlagefläche
- 13: Aufnahme
- 14: Steg
- 15: Drehachse
- 16: Haltesteg
- 17: Öffnung
- 18: Vorsprung
- 19: Keilstufe
- 20: Gewindedurchmesser/ Schraubdübel
- 21: Schraubenkopf
- 22: Oberfläche
- 23: Werkzeugeingriff
- 24: Einlaufkante

## Patentansprüche

1. Befestigungsvorrichtung (1) für die Befestigung eines mit mindestens zwei Montageelementen (2) versehenen Gehäuses (11) eines Lüfters (3) an einer Wand (4) oder einer Decke, mit in der Wand (4) oder der Decke angeordneten Aufnahmevorrichtungen (5) oder Bohrungen zur Aufnahme von Befestigungsschrauben (6) zum Festlegen des Lüfters (3), wobei die Befestigungsvorrichtung (1) einteilig oder form-/oder kraftschlüssig zweigeteilt mit einer Rückwand des Gehäuses (11) des Lüfters (3) verbindbar ist,
wobei die Befestigungsvorrichtung eine Justiereinrichtung (7) für die Befestigungsschraube (6) aufweist, wobei die Justiereinrichtung (7) aus einer drehbaren Platte (8) und einer auf der Platte (8) als Längsschlitz geformt angeordneten Öffnung (9) gebildet ist, welche dem Gewindedurchmesser oder Schraubdübel der Befestigungsschraube (6) angepasst ist, damit die Befestigungsschraube (6) in der Öffnung (9) verschiebbar gelagert ist, wobei die Platte (8) kreisrund ausgebildet ist, und
wobei die Befestigungsvorrichtung eine Aufnahme aufweist, die an der Rückwand (10) des Gehäuses (11) angeordnet werden kann,
**dadurch gekennzeichnet,**
**dass** die Aufnahme (13) ein halbkreisförmiger Steg (14) ist, der die Platte (8) mit einem Teilumfang umschließt, und der in Richtung zur Drehachse (15) der Platte (8) überdeckend Haltestege (16) aufweist, welche die Platte (8) lotrecht zur Drehachse (15) sichern, damit die Platte in der Aufnahme drehbar gelagert ist.

2. Befestigungsvorrichtung (1) nach Anspruch 1, **dadurch gekennzeichnet,**
**dass** sich mit halbkreisförmiger Aufnahme (13) auf der Rückwand (10) eine Öffnung (17) zum Fügen der Platte (8) bildet, wobei im Bereich der Öffnung (17) ein Vorsprung (18) angeordnet ist, der auf der zur Aufnahme (13) innen gerichteten Seite eine Keilstufe (19) bildet, wobei sich die Keilstufe (19) in Richtung der Aufnahme (13) abgewandten Seite bis zur Oberfläche der Rückwand (10) verjüngt.

3. Befestigungsvorrichtung (1) nach Anspruch 2, **dadurch gekennzeichnet,**
**dass** die Platte (8) parallel zur Rückwand (10) verschiebbar in die Aufnahme (13) über den Vorsprung (18) hinter die Keilstufe (19) greifend einrastet, damit die Platte gegen ein **Verschieben gesichert** ist.

4. Gehäuse (11) eines Lüfters (3) mit mindestens zwei Befestigungsvorrichtungen (1) gemäß einer oder mehreren der vorangehenden Ansprüche als Montageelemente (2) für die Befestigung des Lüfters an einer Wand (4) oder einer Decke, mit in der Wand oder der Decke angeordneten Aufnahmevorrichtungen (5) oder Bohrungen zur Aufnahme von Befestigungsschrauben (6) zum Festlegen des Lüfters,
wobei die Befestigungsvorrichtungen (1) an einer Rückwand (10) des Gehäuses (11) des Lüfters (3) angeordnet sind und damit angrenzend gegen eine Anlagefläche (12) der Wand (4) oder der Decke anpressbar sind, und
wobei die Befestigungsschrauben (6) durch jeweils die Öffnung (9) der Platte (8) der Befestigungsvorrichtung (1) aufgenommen werden können und anziehbar sind.

## Claims

1. Fixing device (1) for the fixing, to a wall (4) or to a ceiling, of a housing (11) of a ventilator (3), which (housing) is provided with at least two mounting elements (2), mounting fixtures (5) or holes arranged in the wall (4) or the ceiling to accept fixing screws (6) for fixing the ventilator (3),
with the fixing device (1) being able to be connected to the rear wall of the housing (11) of the ventilator (3) as a single part or positively or non-positively as two parts, with the fixing device comprising an adjusting device (7) for the fixing screw (6), with the adjusting device (7) being formed from a rotatable plate (8) and an opening (9) which is formed on the plate (8) as a linear slot and which is matched to the thread diameter or screw dowel of the fixing screw (6) so that the fixing screw (6) is mounted displaceably in the opening (9),
with the plate (8) being circular in configuration, and with the fixing device comprising a mounting which can be arranged on the rear wall (10) of the housing (11),
**characterised in that,**
the mounting (13) is a semicircular bar (14) which surrounds the plate (8) with a partial circumference, and which in direction to the axis of rotation (15) comprises holding lips (16) which cover the plate (8) and which secure the plate (8) vertically to the axis of rotation (15) so that the plate (8) is mounted rotatably in the mounting (13).

2. Fixing device (1) of claim 1
**characterised in that**
an opening (17) for joining the plate (8) is formed with a semicircular mounting (13) on the rear wall (10), there being arranged in the region of the opening (17) a protrusion (18) which on the side inwardly facing the mounting (13) forms a wedge step (19), said wedge step (19) tapering down to the surface of the rear wall (10) toward the side facing away from the mounting (13).

3. Fixing device (1) of claim 2
**characterised in that**
the plate (8) moveably engages parallel to the rear wall (10) into the mounting (13) across the protrusion (18) and behind the wedge step (19), so that the plate (8) is secured against displacement.

4. Housing (11) of a ventilator (3), having at least two fixing devices (1) of one or more of the preceding claims as a mounting element (2) for fixing the ventilator to a wall (4) or to a ceiling, having mounting fixtures (5) or holes arranged in the wall or ceiling for receiving fixing screws (6) for fixing the ventilator,
with the fixing devices (1) being arranged on a rear wall (10) of the housing (11) of the ventilator (3) so they can be pressed up against a contact surface (12) of the wall (4) or of the ceiling, and
with the fixing screws (6) each being able to be received through the opening (9) of the plate (8) of the fixing device (1) and be tightened.

## Revendications

1. Dispositif de fixation (1) destiné à fixer sur une paroi (4) ou à un plafond au moins un boîtier (11) d'un ventilateur (3), qui est pourvu d'au moins deux éléments de montage (2), avec des dispositifs de réception (5) ou des alésages, qui, disposés dans la paroi (4) ou le plafond, sont destinés à la réception de vis de fixation (6) pour la fixation du ventilateur (3), sachant que le dispositif de fixation (1) est apte à être relié en une seule pièce ou sous forme de deux pièces, par engagement géométrique ou par adhérence, à une paroi arrière du boîtier (11) du ventilateur (3), sachant que le dispositif de fixation est doté d'un dispositif d'ajustage (7) pour la vis de fixation (6), le dispositif d'ajustage (7) étant formé par une plaque rotative (8) et une ouverture (9), qui, pratiquée dans la plaque (8) en tant que fente longitudinale, est adaptée au diamètre du filetage ou de la cheville de vis de la vis de fixation (6), de manière à ce que la vis de fixation (6) puisse être déplacée dans l'ouverture (9), sachant que la plaque (8) est réalisée en forme de cercle et sachant que le dispositif de fixation est doté d'un réceptacle, qui est apte à être installé sur la paroi arrière (10) du boîtier (11),
**caractérisé en ce que** le réceptacle (13) est une patte (14) en forme de demi-cercle, qui enceint la plaque (8) avec une partie de son pourtour, et qui présente des demi-pattes (16), qui, recouvrant la plaque (8) en direction de l'axe de rotation (15), sécurisent la plaque (8) perpendiculairement à l'axe de rotation (15), dans le réceptacle (13), afin que la plaque (8) soit montée en rotation dans le réceptacle (13).

2. Dispositif de fixation (1) selon la revendication 1,
**caractérisé en ce que**, par le réceptacle (13) en forme de demi-cercle, une ouverture (17) est formée sur la paroi arrière (10), laquelle ouverture est destinée à l'incorporation de la plaque (8), sachant que, dans le secteur de l'ouverture (17), est disposée une saillie (18), qui forme un gradin trapézoïdal (19) sur le côté orienté intérieurement vers le réceptacle (13), sachant que le gradin trapézoïdal (19) s'amincit en direction du côté opposé au réceptacle (13), jusqu'à la surface de la paroi arrière (10).

3. Dispositif de fixation (1) selon la revendication 2,
**caractérisé en ce que**, la plaque (8), apte à être déplacée dans le réceptacle (13), parallèlement à la paroi arrière (10), s'enclenche, par le biais de la saillie (18), en s'engageant derrière le gradin trapézoïdal (19), afin que la plaque soit sécurisée contre un déplacement.

4. Boîtier (11) d'un ventilateur (3) avec au moins deux dispositifs de fixation (1) selon l'une ou plusieurs des revendications précédentes en tant qu'éléments de montage (2) destinés à la fixation d'un ventilateur sur une paroi (4) ou à un plafond, avec des dispositifs de réception (5) ou des alésages destinés à la réception de vis de fixation (6) pour la fixation du ventilateur, sachant que les dispositifs de fixation (1) sont disposés sur la paroi arrière (10) du boîtier (11) du ventilateur (3) et sont ainsi aptes à être pressés contre une surface d'appui (12) de la paroi (4) ou du plafond, et sachant que les vis de fixation (6) peuvent être introduites chacune dans l'ouverture (9) de la plaque (8) du dispositif de fixation (1) et être serrées.
